# EUROPÄISCHE PATENTSCHRIFT

(11) **EP 0 836 676 B1**
(45) Veröffentlichungstag und Bekanntmachung des Hinweises auf die Patenterteilung: **02.10.2002**
(21) Anmeldenummer: 96922892.3
(22) Anmeldetag: 01.07.1996
(51) Int. Cl.: F02M 69/46, F16J 15/10

(54) **KÄLTEFESTE DICHTUNGSANORDNUNG FÜR FAHR- UND FLUGZEUGE, SCHIFFE UND MASCHINEN**
LOW-TEMPERATURE-RESISTANT SEALING SYSTEM FOR VEHICLES, AIRCRAFT, SHIPS AND MACHINES
JOINT D'ETANCHEITE RESISTANT AUX BASSES TEMPERATURES POUR VEHICULES, AVIONS, BATEAUX ET MACHINES

(30) Priorität: 03.07.1995 DE 29510769 U; 15.09.1995 DE 29514852 U
(43) Veröffentlichungstag der Anmeldung: 22.04.1998
(73) Patentinhaber: Parker Hannifin GmbH, 74321 Bietigheim-Bissingen (DE)
(72) Erfinder: ACHENBACH, Manfred, D-74321 Bietigheim-Bissingen (DE); KRUMEICH, Peter, D-88709 Meersburg (DE); STREIT, Gerhard, D-74223 Flein (DE)
(74) Vertreter: Wolff, Michael, Dipl.-Phys.
(86) Internationale Anmeldenummer: EP9602864
(87) Internationale Veröffentlichungsnummer: WO97002427

(56) Entgegenhaltungen:
- WO-A-94/03743
- DE-A- 4 413 863
- US-A- 5 044 340

## Beschreibung

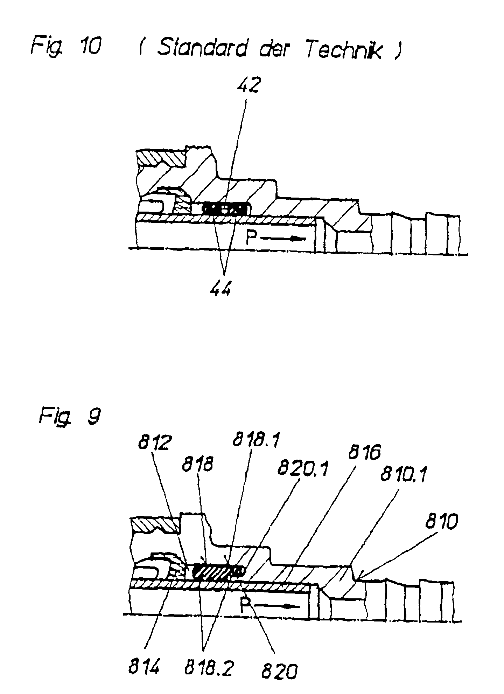

Die Erfindung betrifft eine Dichtungsanordnung gemäß Oberbegriff des Anspruches 1. Bei solchen bekannten Dichtungsanordnungen der im Oberbegriff des Anspruches 2 genannten Art, mit einem O-Ring als Dichtungselement, sitzt dieses in einer radial äußeren Nut des Ventilgehäuses, dessen mit der Kraftstoffzuleitung zu verbindendes Ende durch einen nutbegrenzenden Flansch gebildet ist, der an einer Ringfläche anschlägt, die sich am Grund der kreiszylindrischen Leitungsabzweigung zur Aufnahme des Ventilgehäuses befindet und die Durchbohrung der Leitung an der Abzweigstelle säumt; siehe Fig. 8.
Nachteilig ist an einer solchen Dichtungsanordnung, daß die für den Kälteeinsatz verwendeten Dichtungselemente besondere Materialeigenschaften aufweisen müssen, um tauglich zu sein, und dennoch bei tiefen Temperaturen von unter 233 K (minus 40°C) versagen, wenn die Quellung des O-Ringes durch den Kraftstoff nicht mehr ausreicht, um zu verhindern, daß das Dichtungselement radial außen eine Leckage bewirkt; vgl. G. Streit und M. Achenbach: "Funktionalität von Elastomerdichtungen bei tiefen Temperaturen am Beispiel von 0-Ringen, Teil 2: Einfluß von Kraftstoffen auf die Dichtkraft bei tiefen Temperaturen" in "Kautschuk, Gummi, Kunststoffe KGK, Internationale Fachzeitschrift für polymere Werkstoffe", 10/93 (Oktober 1993, 46. Jahrgang), Seite 812 ff.
Daher liegt der Erfindung die Aufgabe zugrunde, eine Dichtungsanordnung der eingangs genannten Art zu schaffen, welche auch bei unter minus 40° Celsius und unzureichender oder ausbleibender (zum Beispiel bei Betriebspausen) Quellung des Dichtungselementes (O-Ring) für eine sichere Abdichtung der Steckverbindung des Einspritzventiles und der zugeordneten Abzweigung der Kraftstoffzuleitung sorgt.

Diese Aufgabe ist, ausgehend von einer Dichtungsanordnung gemäß Oberbegriff des Anspruches 1 erfindungsgemäß im wesentlichen durch die kennzeichnenden Merkmale des Anspruches 1 gelöst. Vorteilhaft ist an dieser Aufgabenlösung, daß als Dichtungselement gewöhnliche Dichtringe ohne besondere Eigenschaften verwendet werden können und die Dichtheit auch dann noch gewährleistet ist, wenn infolgedessen oder wegen zeitweiligen Ausbleibens der Kraftstoffzufuhr eine Quellung die kältebedingte Schrumpfung des Dichtungselementes nicht mehr zu kompensieren vermag.
Die Erfindung beruht auf der Erkenntnis, daß ein nicht an der Wandung des Einbauraumes befestigtes Dichtungselement radial nach innen auf seinen Träger schrumpft und dabei die radial innere Dichtwirkung verstärkt, während die radial äußere Dichtwirkung verringert wird.
Eine spezielle Aufgabenlösung stellt die erfindungsgemäße Dichtungsanordnung nach Anspruch 2 dar; sie kann durch die kennzeichnenden Merkmale der Ansprüche 3 bis 9 ausgestaltet werden, womit die Ausgestaltungsmöglichkeiten aber nicht erschöpft sind.
Die vorgeschlagene formschlüssige Verbindung des erfindungsgemäßen Dichtungselementes mit der zugeordneten Abzweigung der Kraftstoffzuleitung bewirkt den Halt des Dichtungselementes an der Zuleitungsabzweigung vor dem Einstecken und Sichern des Einspritzventiles.
Bei der Ausgestaltung gemäß Anspruch 9 sorgt das klammerartige Dichtungselement für eine Sicherung des Zusammenhalts des Einspritzventiles und der Leitungsabzweigung, wobei der Flanschadapter beteiligt ist, der einstückig mit der Kraftstoffzuleitung ausgebildet sein könnte.
Bei einer bekannten Dichtungsanordnung der im Oberbegriff des Anspruches 10 genannten Art sind zwei O-Dichtungsringe, einer aus kraftstoffbeständigem Fluorkarbon (FPM nach ISO 1629) und einer aus teurerem Fluorsilikonwerkstoff (FVMQ) vorhanden. Zwischen beiden O-Ringen liegt ein diese axial trennender Distanzring. Dabei liegt der Ring aus Fluorkarbon an der Stirnfläche des ringförmigen Einbauraumes an, welche der Mündung des Rohrendes benachbart ist; siehe Fig. 10. - Bei Kälte beginnt der Fluorkarbon-O-Ring frühzeitig undicht zu werden. Der kälteflexiblere Fluorsilikon-O-Ring, der jedoch mechanisch weniger belastbar ist und eine höhere Permeationsrate als der Fluorkarbon-O-Dichtring hat, soll diese Leckage bei Kälte verhindern.

Demgegenüber zeichnet sich die erfindungsgemäße Dichtungsanordnung durch die kennzeichnenden Merkmale des Anspruches 10 aus. Dabei ist der Dichtungsring so beschaffen, daß beim Abkühlen im Temperaturbereich des Phasenübergangs vom entropie-elastischen zum energie-elastischen Zustand eine Leckage verhindernde Dichtkraft erhalten bleibt, die bei weiterer Abkühlung aufgrund des Verhältnisses der Wärmeausdehnungskoeffizienten der unterschiedlichen Materialien des Dichtungsringes einerseits, bzw. des Stutzens und des Rohrendes andererseits sogar ansteigt. Im Phasenübergang werden die bei der Montage erzeugten Spannungen eingefroren, wobei die gleichzeitig einsetzende temperaturabhängige Schrumpfung für diesen Anstieg sorgt. Hauptvorteil auch der erfindungsgemäßen Dichtungsanordnung gemäß Anspruch 10 ist ihre sichere, vollkommene Dichtheit auch bei sehr tiefen Betriebstemperaturen (unter -40°C), ohne daß an die Materialeigenschaften des Dichtungsringes außer an die Verträglichkeit mit Kraftstoffen besondere Anforderungen zu stellen wären, insbesondere an die Flexibilität bei Kälte; der Ring kann also aus preisgünstigen Materialien gefertigt werden, erfordert darüberhinaus keine zwei anderen Ringe und läßt sich ohne Verdrillen (L-Profil) leicht montieren, bevor das Rohrende durchgesteckt wird; er verdrillt sich auch bei Montage und Demontage des Rohrendes nicht.
Die WO-A 91/11610 (US-A-5 004 340) offenbart sowohl eine gattungsgemäße Dichtungsanordnung nach dem Oberbegriff des Anspruches 1 an dem der Kraftstoffzuleitung (18) benachbarten Ende (14) des Einspritzventils (10) - eine Anordnung, die nicht ganz den eingangs beschriebenen bekannten Dichtungsanordnungen entspricht, weil kein Flansch des Ventilgehäuses an der Anzweigung (16) der Zuleitung (18) anschlägt, sondern das kolbenartig ausgebildete Ventilende (14) "teleskopisch" in die Abzweigung (16) eingreift - als auch eine gattungsähnliche Dichtungsanordnung an dem einem Verteiler (22) benachbarten Ende (12) des Ventils (10), wo im Anschluß an einen Außenbund (32) des Ventilgehäuses, welcher den bekannten Flansch zur axialen Begrenzung der Ringnut (26) zur Aufnahme des Dichtungselementes (34) ersetzt, eine Fortsetzung des Nutgrundes als äußeres Ende des Ventilgehäuses berührungsfrei in eine Bohrung (20) des Verteilers 822) vorgreift, während das im wesentlichen L-förmige Dichtungselement (34), das axial länger als radial dick ist und mit seinem dickeren Abschnitt in der Ringnut (26) gelagert ist, zwar den ringförmigen Umfang des Bundes (32), nicht jedoch jenes äußereste Gehäuseende berührt. Dafür legt sich unter dem Druck in der Zuleitung (18) die axial vordere kreisringförmige Stirnfläche des Dichtungselementes (34) an eine Schulter (38), die von der Verteilerbohrung (20) und einer weiteren Sackbohrung (36) im Verteiler (22) gebildet ist, während die radial äußere Umfangsfläche (42) des Dichtungselementes (34) die Wandung der Sackbohrung (36) berührt, solange keine tiefen Temperaturen herrschen. Ist das aber der Fall, dann endet diese Berührung und das Dichtungselement (34) schrumpft radial innen auf das Ventilende (12) auf, wobei es nicht den Bund (32) übergreifen und sich nicht an das äußerste Gehäuseende dichtend anlegen kann.
Im Gegensatz zur erfindungsgemäßen Dichtungsanordnung findet also am verteilernahen Gehäuseende (12) nicht wie am Zuleitungsnahen Gehäuseende (14) eine radiale, sondern eine axiale Abdichtung statt, die bei radialer Schrumpfung des Dichtungselementes (34) noch dichten kann, aber durch den Wegfall der Dichtstrecke entlang der Außenmantelfläche (42) des Dichtungselementes einem erhöhten Druckgradienten ausgesetzt ist, wenn die Zuleitung (18) überhaupt unter Druck steht.

Im folgenden ist die Erfindung anhand mehrerer durch die Zeichnung beispielhaft dargestellter Ausführungsformen der erfindungsgemäßen Dichtungsanordnung im einzelnen erläutert. Es zeigt:
- Fig. 1: Einen mit Fig. 8 vergleichbaren, abgebrochen zur Hälfte dargestellten zentralen Längsschnitt durch eine prinzipielle erste Ausführungsform bei der mit einem Einspritzventil bestückten Abzweigung einer Kraftstoffzuleitung
- Fig. 2 und 3: Je eine Fig. 1 entsprechende, aber ganz dargestellte Schnittansicht einer zweiten bzw. dritten Ausführungsform
- Fig. 4: Einen abgebrochen dargestellten zentralen Längsschnitt durch eine vierte Ausführungsform bei der Abzweigung einer Kraftstoffzuleitung, deren Wandung an der Abzweigstele das Einspritzventil aufnimmt
- Fig. 5: Eine den Fig. 2 und 3 entsprechende Schnittansicht einer fünften Ausführungsform in Explosionsdarstellung bei der Abzweigung einer Kraftstoffzuleitung in ein nicht dargestelltes Einspritzventil
- Fig. 6 und 7: Der Fig. 5 entsprechende Schnittansichten einer sechsten bzw. siebten Ausführungsform in Explosionsdarstellung gleichen Umfangs
- Fig. 9: Einen halben zentralen Längsschnitt durch eine achte Ausführungsform
- Fig. 10: Eine entsprechende Darstellung zum Stand der Technik

Gleiche oder einander entsprechende Gebilde (Teile, Flächen, Räume) verschiedener Ausführungsformen sind mit Bezugszahlcn bezeichnet, die sich um das Ein- oder Mehrfache von 100 unterscheiden und durch ihre Hunterterziffern die Nummer der Ausführungsform wiedergeben. Die Bezugszahlen unter 100 gelten für Fig. 8 und 10 (Stand der Technik).

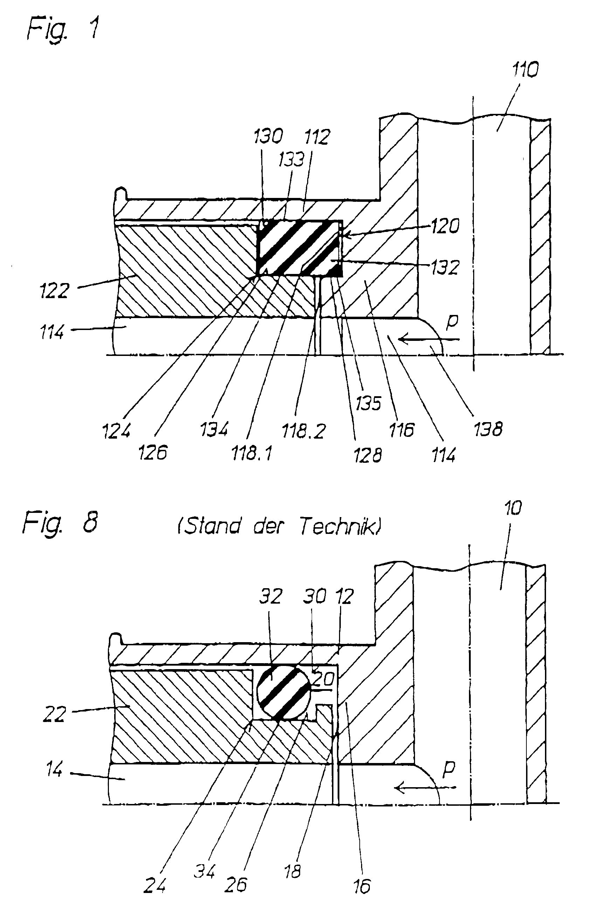

Gemäß Fig. 1 ist an eine kreiszylindrische Kraftstoffzuleitung 110, nämlich eine Verteilerleitung für mehrere Einspritzventile, senkrecht eine kreiszylindrische Abzweigung 112 angeformt, die eine mit dem Hohlraum der Zuleitung 110 in Verbindung stehende zentrale Bohrung 114 und einen an die Wandung der Zuleitung 110 angeformten massiven Sockel 116 aufweist, der die Bohrung 114 mit einer radial nach innen rechtwinklig hochgestuften ringförmigen Grundfläche 118 säumt, deren radial äußerer Teil 118.1 einen Einbauraum 120 bohrungsaxial gegen die Zuleitung 110 begrenzt, und deren radial innerer Teil 118.2 der radialen Stirnfläche des Ventilgehäuses 122 eines Einspritzventils gegenübersteht. Das in Fig. 1 gezeigte zuleitungsnahe Ende des Ventilgehäuses 122 ist kreiszylindrisch geformt und steckt in der Abzweigung 112, wobei es mit einer ringförmigen, radial äußeren, rechtwinklig profilierten Eckaussparung 124 den Einbauraum 120 axial gegen das Einspritzventil und radial nach innen mit einer radial äußeren Ringfläche 126 begrenzt, die axial hinter dem Spalt zwischen Sockel 116 und Ventilgehäuse 122 durch eine zusätzliche radial äußere Ringfläche 128 gleichen Durchmessers fortgesetzt wird, welche die Grundflächenteile 118.1 und 118.2 miteinander verbindet.
Der Einbauraum 120, der radial nach außen durch die Wandung der Abzweigung 112 mit kreiszylindrischer Ringfläche 130 koaxial zu den Ringflächen 126 und 128 begrenzt ist, nimmt ein rechteckig profiliertes elastomeres Dichtungselement 132 mit radial äußerer Dichtfläche 133 auf, das im Gegensatz zu der metallischen Zuleitung 110 mit Abzweigung 112 und dem metallischen Ventilgehäuse 122 zum Beispiel aus kraftstoffbeständigem Gummi besteht.

Dabei wurde der Raumfüllungsgrad so gewählt, daß das Dichtungselement 132 bei Montagetemperatur mit radialer Vorspannung auf den inneren Ringflächen 126 und 128 sowie an der äußeren Ringfläche als Gegenflächen anliegt. Sinkt die Betriebstemperatur unter die Montagetemperatur und kann die Quellung des Dichtungselementes unter Kraftstoffeinwirkung dessen durch Schrumpfung verminderte radial äußere Vorspannung nicht mehr aufrechterhalten, dann hebt das Dichtungselement 132 zwar mit seiner Dichtfläche 133 von der Ringfläche 130 ab; gleichzeitig schrumpft das Dichtungselement 132 aber auf die zusätzliche Ringfläche 128 ebenso wie auf die Ringfläche 126 auf, wodurch der Spalt zwischen Sockel 116 und Ventilgehäuse 122 in beiden axialen Richtungen vollkommen sicher abgedichtet wird, weil das Dichtungselement 132 eine axiale Erstreckung 135 in Form einer zusätzlichen, radial inneren Dichtfläche 134 aufweist, die auf die zusätzliche, radial äußere Ringfläche 128 des Sockels übergreift und auf dieser, den Einbauraum radial innen mitbegrenzenden Ringfläche 128 dichtend sitzt.

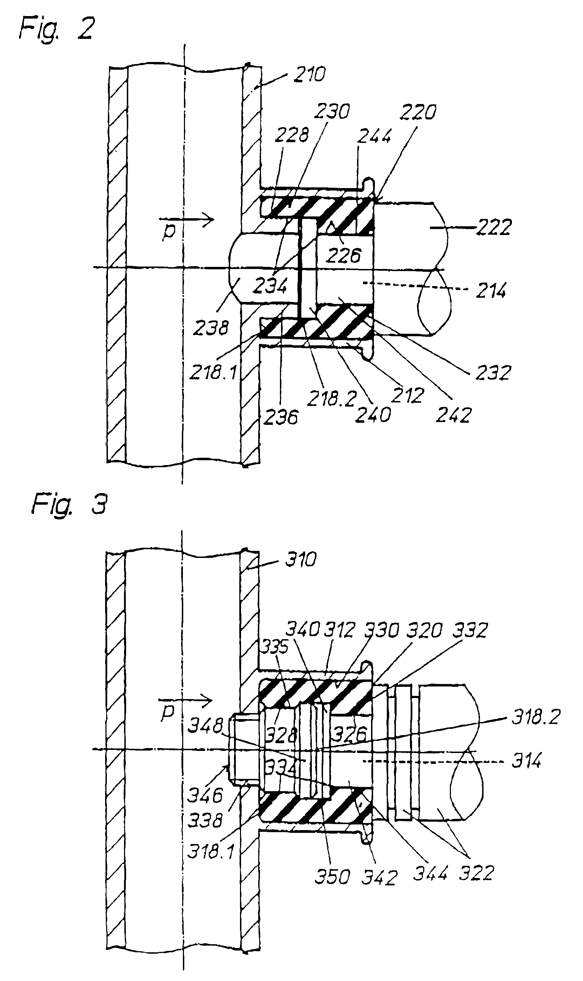

Gemäß Fig. 2 ist an eine kreiszylindrische Zuleitung 210 senkrecht eine kreiszylindrische Abzweigung 212 angeformt, in der ein kreiszylindrischer koaxialer Innenstutzen 236 liegt, der an die Berandung der radialen Bohrung 238 der Zuleitung 210 an der Abzweigungsstelle angeformt ist. An der innerhalb der Abzweigung 212 axial vertieft liegenden freien Stirnfläche des Innenstutzens 236 liegt ein kreisscheibenförmiger Flansch 240 bündig an, der mit einem bis an die Abzweigung 212 heranreichenden Ventilgehäuse 222 und einem verbindenden kreiszylindrischen Zapfen 242 eine rechteckig profilierte Ringnut 244 bildet, in die ein manschettenartiges L-förmiges Dichtungselement 232 eingreift, das den gesamten Einbaurum 220 axial zwischen der Zuleitung 210 einerseits und dem Ventilgehäuse 222 andererseits sowie radial zwischen der Abzweigung 212 einerseits und dem Grund der Ringnut 244, der Umfangsfläche des Flansches 240 und der Außenfläche 228 des Innenstutzens 236 andererseits ausfüllt, wobei der Durchmesser des Zapfens 242 kleiner ist als der Außendurchmesser des Innenstutzens 236 und der gleich große Durchmesser des Flansches 240. - Die Durchmesser des Zapfens 242 bzw. der Bohrung 238 sind im Ausführungsbeispiel zufällig gleich.
Die radiale Außenfläche 228 des Innenstutzens 236 bildet also hier die zusätzliche Ringfläche für den übergriff des Dichtungselementes 232.

Gemäß Fig. 3 fehlt bei einer Zuleitung 310 mit Abzweigung 312 deren Innenstutzen 236. Dafür ist in eine radiale Bohrung 338 der Zuleitung 310 längs der Zylinderachse der Abzweigung 312 ein koaxialer Adapter 346 gesteckt, der zur fluidleitenden Verbindung der Zuleitung mit einem Einspritzventil axial durchbohrt ist und innerhalb der Abzweigung 312 an seinem freien Ende einen trapezförmig profilierten, ringförmigen Flansch 348 sowie axial daneben eine radial äußere kreiszylindrische Ringfläche 328 aufweist. Nahe bei dem Flansch 348 befindet sich ein kreisscheibenformiger Flansch 340, der mit einem Ventilgehäuse 322 des Einspritzventiles mittels eines kreiszylindrischen Zapfens 242 verbunden ist, dessen zylindrische Außenfläche 326 den Grund einer rechtwinklig profilierten Ringnut 344 bildet.
Den Einbauraum zwischen der Abzweigung 312 radial außen und dem Adapter 346 sowie dem Zapfen 342 radial innen und axial zwischen der Wandung der Zuleitung 310 einerseits sowie dem Ventilgehäuse 322 andererseits ist ausgefüllt durch ein Dichtungselement 332, das radial innen eine mittlere Ringnut 350 zur Aufnahme der beiden Flansche 340 und 348 aufweist; die Flanken der Ringnut verklammern die beiden Flansche. Die radial innere Dichtfläche 334 ist also gestuft und liegt dichtend sowohl an der Ringfläche 326 des Zapfens 342 als auch an der zusätzlichen Ringfläche 328 des Adapters 346 an. Dabei ist der Durchmesser des Zapfens 342 etwas kleiner als der Durchmesser der Adapter-Ringfläche 328, während die Durchmesser der beiden Flansche 340 und 348 gleich sind.

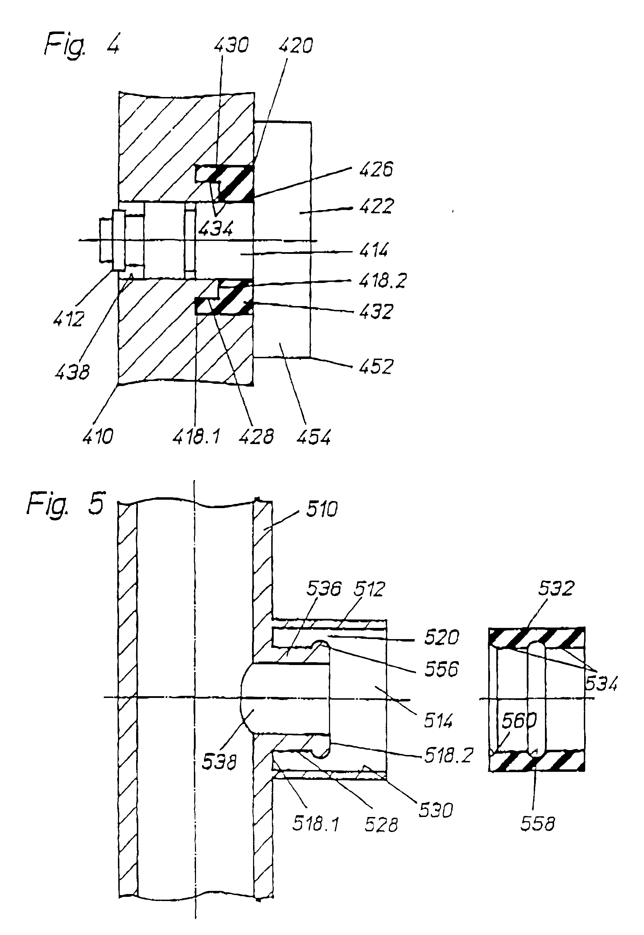

Gemäß Fig. 4 ist in die kreiszylindrische Wandung einer Zuleitung 410 eine Abzweigung 412 integriert, da diese lediglich aus einer radialen Bohrung 414 der Zuleitungswandung besteht. In die Bohrung 414 ist ein Einspritzventil 452 gesteckt, das einen Flansch 454 aufweist, der an der Zuleitung 410 anschlägt, mit der er einen L-förmig profilierten ringförmigen Einbauraum 420 begrenzt, den ein ebenso profiliertes Dichtungselement 432 ausfüllt, das eine rechtwinklig gestufte, radial innere Dichtfläche 434 aufweist, deren kreiszylindrischer Abschnitt mit größerem Durchmesser auf einer kreiszylindrischen zusätzlichen Ringfläche 428 sitzt, die den Einbauraum 420 radial innen mitbegrenzt.

Gemäß Fig. 5 kann die Ausführungsform gemäß Fig. 2 dahingehend abgeändert werden, daß an das freie Ende des Innenstutzens 536 ein Außenwulst 556 angeformt wird, der als radiale Erhebung formschlüssig in eine innere Ringnut 558 als radiale Vertiefung eines Dichtungselementes 532 eingreift, das im übrigen kreiszylindrisch geformt ist,aber an seinem der Zuleitung 510 zugewandten Ende innen eine konische Fase 560 aufweist, die das Aufstecken des Dichtungselementes 532 auf den Innenstutzen 536 über den Außenwulst 356 hinweg erleichtert, auf welchen die Wandung der Ringnut 558 schnappt.

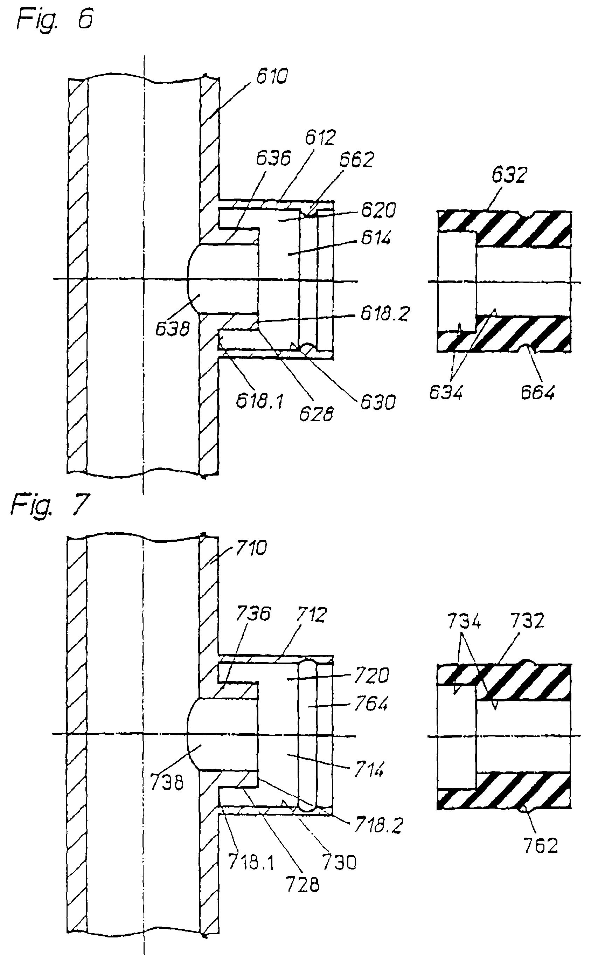

Gemäß Fig. 6 kann die Ausführungsform gemäß Fig. 2 wahlweise oder zusätzlich zu der Änderung gemäß Fig. 5 dahingehend geändert werden, daß einerseits das gerade Profil der radial inneren Ringfläche 630 der Abzweigung 612 der Zuleitung 610 eine kreisbogenförmige Erhebung 662 und andererseits das Dichtungselement 632 eine entsprechende umlaufende Vertiefung 664 erhält; in diese Vertiefung schnappt die Erhebung 662 ein, wenn das Dichtungselement 632 in die Abzweigung 612 und anschließend auf den Innenstutzen 636 bis zum Anschlag an der Zuleitung 610 gesteckt wird.

Gemäß Fig. 7 kann die Ausführungsform gemäß Fig. 6 dadurch abgewandelt werden, daß die Erhebung 762 und die Vertiefung 764 ihre Plätze tauschen und sich nun am Dichtungselement bzw. an der Abzweigung 712 befinden.

Eine mit ihrem rechten Ende in ein nicht gezeigtes Schlauchende steckbare Muffe 810 weist einen innen kreiszylindrischen Abschnitt 810.1 auf, an den sich vom Muffenende weg ein koaxialer kreiszylindrischer Ringraum 812 größeren Innendurchmessers als Einbauraum anschließt, der an einem in die Muffe 810 gesetzten Abstreifer 814 endet, durch den ein steifes Rohrende 816 in den Muffenabschnitt 810.1 gesteckt ist. Während beim Stand der Technik (Fig. 10) im rechteckig profilierten Ringraum 40 zwei durch einen dritten Ring 42 distanzierte O-Dichtungsringe 44 liegen, die am Außenumfang des Rohrendes 46 angreifen, ist bei der Erfindung (Fig.9 ) ein einziger, flacher, L-förmig profilierter Dichtungsring 818 im Ringraum 812, an dessen äußerer zylindrischer Wandung seine zylindrische Außenfläche 818.1 anliegt, während seine gestufte zylindrische Innenfläche 818.2 am Rohrende 816 und axial daneben am Außenumfang 820.1 eines axial in den Ringraum gegen den Abstre fer 14 vorspringenden zylindrischen Stutzens 820 dichtend anliegt, der das Rohrende 816 umschließt. Die gestufte Innenfläche 818.2 besteht also aus einer eingeebneten Dichtfläche mit axialer Erstreckung als zusätzlicher Dichtfläche, welche am Rohrende 816 bzw. am Stutzen 820 mit den zugeordneten Gegenflächen äußerlich anliegen.

## Patentansprüche (Patentansprüche für folgende(n) Vertragsstaat(en): ES, SE)

1. Kältefeste Dichtungsanordnung für Fahr- und Flugzeuge sowie Schiffe und Maschinen, mit einem ringförmigen, elastomeren Dichtungselement (132), das mit zwei einander abgewandten Dichtflächen (133 und 134) an zwei einander zugewandten Gegenflächen (126 und 130) eines Einbauraumes (120) für das Dichtungselement unter Vorspannung anliegt, **dadurch gekennzeichnet, daß** für die Abdichtung im Kältezustand an dem Dichtungselement (132) mindestens eine zusätzliche Dichtfläche (135) vorhanden ist, die bei Abkühlung auf eine zusätzliche Gegenfläche (128) schrumpft, die von einem den Einbauraum (120) begrenzenden Teil (16) gebildet ist, dessen Wärmeausdehnungskoeffizient wesentlich kleiner ist als derjenige des Dichtungselementes.

2. Dichtungsanordnung nach Anspruch 1 für den Anschluß eines Ventils zur Kraftstoffeinspritzung in Verbrennungsmotoren an eine Kraftstoffzuleitung (110), insbesondere Verteilerleitung für mehrere Einspritzventile; wobei das Dichtungselement (132) in einem vom Ventil und einer Abzweigung (112, 116) der Leitung (110), oder dieser selbst, gemeinsam gebildeten Einbauraum (120) angeordnet ist und dabei einerseits an einer radial äußeren ringförmigen Gegenfläche (126) des axial durchbohrten Ventilgehäuses (122) anliegt sowie andererseits an der koaxialen, radial inneren ringförmigen Gegenfläche (130) der Abzweigung (112) oder Leitung (110) anliegen soll, **dadurch gekenn-zeichnet, daß** das Dichtungselement (132) eine axiale Erstreckung (135) seiner radial inneren Dichtfläche (134) als zusätzliche Dichtfläche aufweist, die auf eine zusätzliche, radial äußere, ringförmige Gegenfläche (128) der Abzweigung (112, 116) oder Leitung (110), oder eines damit verbundenen Teiles (236; 346), übergreift und an dieser, den axial begrenzenden Einbauraum (120) radial innen mitbegrenzenden Gegenfläche (128) dichtend anliegt; und daß sich die radialen Wärmeausdehnungskoeffizienten der unterschiedlichen Materialien des Dichtungselementes (132) einerseits bzw. des Ventilgehäuses (122) und der Abzweigung (112, 116) oder Leitung (110), oder des damit verbundenen Teiles (236; 346), andererseits so zueinander verhalten, daß das Dichtungselement (132) mit seiner radial inneren Dichtfläche (134) und dessen Erstreckung (135) bei Abkühlung sowohl auf die Gegenfläche (126) des Ventilgehäuses (122) als auch auf die zusätzliche Gegenfläche (128) der Abzweigung (112, 116) oder Leitung (110), oder des damit verbundenen Teiles (236; 346), schrumpft.

3. Dichtungsanordnung nach Anspruch 2, **dadurch gekennzeichnet, daß** die Profile des ringförmigen Einbauraumes (120) bzw. des Dichtungselementes (132) im wesentlichen rechteckig sind.

4. Dichtungsanordnung nach Anspruch 2, **dadurch gekennzeichnet, daß** die Profile des ringförmigen Einbauraumes (220) bzw. des Dichtungselementes (232) im wesentlichen L-förmig und gegebenenfalls axial länger als radial dick sind.

5. Dichtungsanordnung nach Anspruch 3 oder 4, **dadurch gekennzeichnet, daß** das Profil des Dichtungselementes (632; 732) radial innen oder außen eine Vertiefung (664; 764) oder Erhebung (662; 762) für den formschlüssigen Eingriff der Wandung der Abzweigung (612; 712) oder Leitung (610; 710) bzw. in diese aufweist.

6. Dichtungsanordnung nach Anspruch 2, **dadurch gekennzeichnet, daß** das Ventilgehäuse (22) aufnehmende zylindrische Ende der Abzweigung (212) oder Leitung (210) einen koaxialen Innenstutzen (236) aufweist, dessen radiale Außenfläche die zusätzliche Gegenfläche (228) bildet.

7. Dichtungsanordnung nach Anspruch 6, **dadurch gekennzeichnet, daß** der Innenstutzen (536) an seinem freien Ende einen radialen Außenwulst (556) für den formschlüssigen Eingriff in eine radial innere Ringnut (558) des Dichtungselementes (532) aufweist.

8. Dichtungsanordnung nach Anspruch 4, **dadurch gekennzeichnet, daß** der Einbauraum (420) an der Abzweigstelle vollständig in der Wandung der Leitung (410) liegt.

9. Dichtungsanordnung nach Anspruch 2, für ein Einspritzventil, dessen an die Kraftstoffzuleitung (310) oder deren Abzweigung (312) anzuschließendes Gehäuseende eine radial äußere Ringnut (344) mit der Gegenfläche (326) für den Sitz des Dichtungselementes (332) aufweist, **dadurch gekennzeichnet, daß** das Profil des Dichtungselementes (332) im wesentlichen ein Rechteck ist mit radial innerer, axial mittiger Ringnut (350) zur Aufnahme zweier einander axial gegenüberstehender Flansche (340 und 348) zur axialen Begrenzung der Ringnut (349) des Ventilgehäuses (322) bzw. am freien Ende eines axial durchbohrten Adapters (346) der mit der Wandung der Leitung (310) kommuniziert und die zusätzliche Gegenfläche (328) zur Anlage der zusätzlichen Dichtfläche (335) des Dichtungselementes (322) bildet.

10. Dichtungsanordnung nach Anspruch 1, für die Steckverbindung einer Schlauchmuffe (810) und eines Rohrendes (816), insbesondere für Kraftstoffleitungen, wieche eine Muffe und ein eingestecktes Rohrende enthalten, die zusammen einen koaxialen zylindrischen Ringraum (812) begrenzen, in dem sich mindestens ein Dichtungsring (818) als Dichtungselement befindet, **dadurch gekennzeichnet, daß** die Muffe (810) einen axial in den Ringraum (812) vorspringenden zylindrischen Stutzen (820) aufweist, der das Rohrende (816) umschließt; und daß ein einziger, im wesentlichen L-förmig profilierter Dichtungsring (818) vorgesehen ist, der eine zylindrische Außenfläche (818.1) als radial äußere Dichtfläche, die an der äußeren zylindrischen Wandung des Ringraumes (812) als Gegenfläche anliegt, und eine gestufte zylindrische Innenfläche (818.2) als radial innere Dichtfläche mit Erstreckung aufweist, die am Rohrerde mit äußerlicher Gegenfläche und axial daneben am Außenumfang des Stutzens (820) als zusätzlicher Gegenfläche dichtend anliegt.

## Patentansprüche (Patentansprüche für folgende(n) Vertragsstaat(en): DE, FR, GB, IT)

1. Kältefeste Dichtungsanordnung für Fahr- und Flugzeuge sowie Schiffe und Maschinen, mit einem ringförmigen, elastomeren Dichtungselement (818), das mit zwei einander abgewandten Dichtflächen (818.1 und 818.2) an zwei einander zugewandten Gegenflächen eines Einbauraumes (812) für das Dichtungselement unter Vorspannung anliegt, wobei für die Abdichtung im Kältezustand an dem Dichtungselement (818) mindestens eine zusätzliche Dichtfläche (818.2) vorhanden ist, die bei Abkühlung auf eine zusätzliche Gegenfläche (820.1) schrumpft, die von einem den Einbauraum (812) begrenzenden Teil (820) gebildet ist, dessen Wärmeausdehnungskoeffizient wesentlich kleiner ist als derjenige des Dichtungselementes; zur **Steckverbindung** einer Schlauchmuffe (810) und eines Rohrendes (816), insbesondere bei Kraftstoffleitungen, welche eine Muffe und ein eingestecktes Rohrende enthalten, die zusammen einen koaxialen zylindrischen Ringraum (812) begrenzen, in dem sich mindestens ein Dichtungsring (818) als Dichtungselement befindet, **dadurch gekennzeichnet, dass** die Muffe (810) einen axial in den Ringraum (812) vorspringenden zylindrischen Stutzen (820) aufweist, der das Rohrende (816) umschließt; und dass ein einziger, im Wesentlichen L-förmig profilierter Dichtungsring (818) vorgesehen ist, der eine zylindrische Außenfläche (818.1) als radial äußere Dichtfläche, die an der äußeren zylindrischen Wandung des Ringraumes (812) als Gegenfläche anliegt, und eine gestufte zylindrische Innenfläche (818.2) als radial innere Dichtfläche mit Erstreckung aufweist, die am Rohrende mit äußerlicher Gegenfläche und axial daneben am Außenumfang des Stutzens (820) als zusätzlicher Gegenfläche dichtend anliegt.

## Claims (Claims for the following Contracting State(s): ES, SE)

1. Sealing arrangement, which is resistant to low temperature, for vehicles, aircraft, ships and machines, comprising an annular, elastomeric sealing element (132) which bears under bias by two mutually remote sealing surfaces (133 and 134) against two mutually facing counter-surfaces (126 and 130) of an installation chamber (120) for the sealing element, **characterised in that** for the sealing in the cold state at least one additional sealing surface (135) is present at the sealing element (132) and on cooling contracts onto an additional counter-surface (128) formed by a part (16) which bounds the installation chamber (120) and the coefficient of thermal expansion of which is substantially smaller than that of the sealing element.

2. Sealing arrangement according to claim 1 for connection of a valve for fuel injection in combustion engines to a fuel feed line (110), in particular a distributor line for several injection valves, wherein the sealing element (132) is arranged in an installation space (120) formed in common by the valve and a branch (112, 116) of the line (110), or this alone, and in that case on the one hand bears against a radially outer annular counter-surface (126) of the axial through-bored valve housing (122) and on the other hand shall bear against the coaxial, radially inner annular counter-surface (130) of the branch (112) or line (110), **characterised in that** the sealing element (132) has an axial extension (135) of its radially inner sealing surface (134) as an additional sealing surface, which engages over an additional, radially outer annular counter-surface (128) of the branch (112, 116) or line (110) or of a part (236; 346) connected therewith and sealingly bears against this counter-surface (128), which radially inwardly co-defines the axially adjoining installation space (120), and that the radial coefficients of thermal expansion of the different materials of the sealing element (132) on the one hand and of the valve housing (122) and the branch (112, 116) or line (110), or of the part (236; 346) connected therewith, on the other hand so behave relative to one another that the sealing element (132) on cooling contracts by its radially inner sealing surface (134) and the extension (135) thereof not only onto the counter-surface (126) of the valve housing (122), but also onto the additional counter-surface (128) of the branch (112, 116) or line (110) or of the part (236; 346) connected therewith.

3. Sealing arrangement according to claim 2, **characterised in that** the profiles of the annular installation space (120) or the sealing element (132) are substantially rectangular.

4. Sealing arrangement according to claim 3, **characterised in that** the profiles of the annular installation space (220) or the sealing element (232) are substantially L-shaped and optionally longer axially than thick radially.

5. Sealing arrangement according to claim 3 or 4, **characterised in that** the profile of the sealing element (632; 732) has radially inwardly or outwardly a depression (664; 764) or protrusion (662; 762) for the mechanically positive engagement of the wall of the branch (612; 712) or line (610, 710) or in this.

6. Sealing arrangement according to claim 2, **characterised in that** the cylindrical end, which receives the valve housing (22), of the branch (212) or line (210) has a co-axial inner stub pipe (236), the radially outer surface of which forms the additional counter-surface (228).

7. Sealing arrangement according to claim 6, **characterised in that** the inner stub pipe (536) has at its free end a radially outer bead (556) for mechanically positive engagement in a radially inner annular groove (558) of the sealing element (532).

8. Sealing arrangement according to claim 4, **characterised in that** the installation space (42) lies entirely in the wall of the line (410) at the branch location.

9. Sealing arrangement according to claim 2, for an injection valve, the housing end - which is to be connected with the fuel feed line (310) or the branch (312) thereof - of which has a radially outer annular groove (344) with the counter-surface (326) for the seat of the sealing element (332), **characterised in that** the profile of the sealing element (332) is substantially a rectangle with a radially inner, axially central annular groove (350) for reception of two mutually axially opposite flanges (340 and 348) for axial limitation of the annular groove (349) of the valve housing (322) or at the free end of an axially through-bored adapter (346), which communicates with the wall of the line (310) and forms the additional counter-surface (328) for the contact of the additional sealing surface (335) of the sealing element (322).

10. Sealing arrangement according to claim 1, for the plug connection of a hose sleeve (810) and a pipe end (816), particularly for fuel lines, which comprise a sleeve and a plugged-in pipe end which together bound a coaxial cylindrical annular chamber (812) in which at least one sealing ring (818) is disposed as sealing element, **characterised in that** the sleeve (810) has a cylindrical stub pipe (820) which protrudes axially into the annular chamber (812) and which surrounds the pipe end (816), and that a single sealing ring (818) profiled substantially in 'L' shape is provided which has a cylindrical outer surface (818.1) as a radially outer sealing surface, which bears against the outer cylindrical wall of the annular chamber (812) as counter-surface, and a stepped cylindrical inner surface (818.2) as a radial inner sealing surface with an extension, which sealingly bears against the pipe end with an external counter-surface and axially adjacent thereto against the outer circumference of the stub pipe (820) as an additional counter-surface.

## Claims (Claims for the following Contracting State(s): DE, FR, GB, IT)

1. Sealing arrangement, which is resistant to low temperature, for vehicles, aircraft, ships and machines, comprising an annular, elastomeric sealing element (818) which bears under bias by two mutually remote sealing surfaces (818.1 and 818.2) against two mutually facing counter-surfaces of an installation chamber (812) for the sealing element, wherein for the sealing in the cold state at least one additional sealing surface (818.2) is present at the sealing element (818) and on cooling contracts onto an additional counter-surface (820.1) formed by a part (820) which bounds the installation chamber (812) and the coefficient of thermal expansion of which is substantially smaller than that of the sealing element; for plug connection of a hose sleeve (810) and a pipe end (816), particularly in fuel lines, which comprise a sleeve and a plugged-in pipe end which together bound a coaxial cylindrical annular chamber (812) in which at least one sealing ring (818) is disposed as sealing element, **characterised in that** the sleeve (810) has a cylindrical stub pipe (820) which protrudes axially into the annular chamber (812) and which surrounds the pipe end (816); and that a single sealing ring (818) profiled substantially in 'L' shape is provided which has a cylindrical outer surface (818.1) as a radially outer sealing surface, which bears against the outer cylindrical wall of the annular chamber (812) as counter-surface, and a stepped cylindrical inner surface (818.2) as a radial inner sealing surface with an extension, which sealingly bears against the pipe end with an external counter-surface and axially adjacent thereto against the outer circumference of the stub pipe (820) as an additional counter-surface.

## Revendications (Revendications pour l'(les) Etat(s) contractant(s) suivant(s): ES, SE)

1. Dispositif d'étanchéité résistant aux basses températures pour des véhicules et des avions ainsi que pour des bateaux et des machines comprenant un élément d'étanchéité (132) annulaire élastomère qui pour deux surfaces d'étanchéité éloignées l'une de l'autre (133 et 134) s'applique sous tension préalable sur deux surfaces antagonistes tournées l'une vers l'autre (126 et 130) d'un espace de montage (120) pour l'élément d'étanchéité ; et il y a, pour l'étanchéité à l'état froid, sur l'élément d'étanchéité (132) au moins une surface d'étanchéité (135) supplémentaire qui lors du refroidissement se rétracte sur une surface antagoniste (128) supplémentaire qui est formée par une partie (16) voisine de l'espace de montage (120), dont le coefficient de dilatation est significativement inférieur à celui de l'élément d'étanchéité.

2. Dispositif d'étanchéité selon la revendication 1 pour raccorder une valve pour l'injection de carburant dans des moteurs à combustion interne à une conduite d'amenée de carburant (110), en particulier une conduite de répartition pour plusieurs soupapes d'injection ; l'élément d'étanchéité (132) étant disposé dans un espace de montage (120) formé conjointement par la soupape et une dérivation (112, 116) de la conduite (110) ou par celle-ci elle-même et d'une part s'appliquant sur une surface antagoniste (126) annulaire extérieure radiale du corps de soupape (122) perforé axialement et d'autre part devant s'appliquer sur la surface antagoniste (130) annulaire intérieure radiale, coaxiale de la dérivation (112) ou de la conduite (110), **caractérisé en ce que** l'élément d'étanchéité (132) présente une étendue (135) axiale de sa surface étanchéité intérieure radiale en tant que surface d'étanchéité supplémentaire qui chevauche une surface antagoniste (128) annulaire extérieure radiale supplémentaire de la dérivation (112, 116) ou de la conduite (110), ou d'une partie (236 ; 346) qui leur est liée et s'applique de façon étanche sur cette surface antagoniste (128) formant la limite intérieure radiale de l'espace de montage formant une limite axiale ; et que les coefficients de dilatation thermiques radiaux des différents matériaux de l'élément d'étanchéité (132) d'une part ou du corps de soupape (122) et de la dérivation (112, 116) ou de la conduite (110), ou de la partie (236 ; 346) qui leur est liée d'autre part sont dans un tel rapport les uns par rapport aux autres que l'élément d'étanchéité (132) par sa surface d'étanchéité (134) interne radiale et l'étendue (135) de celle-ci lors du refroidissement se rétracte aussi bien sur la surface antagoniste (126) du corps de soupape (122) que sur la surface antagoniste (128) supplémentaire de la dérivation (112, 116) ou de la conduite (110), ou de la partie (236 ; 346) qui leur est liée.

3. Dispositif d'étanchéité selon la revendication 2, **caractérisé en ce que** les profils de l'espace de montage (120) annulaire ou de l'élément d'étanchéité (132) sont pour l'essentiel rectangulaires.

4. Dispositif d'étanchéité selon la revendication 2, **caractérisé en ce que** les profils de l'espace de montage (220) annulaire ou de l'élément d'étanchéité (232) sont pour l'essentiel en forme de L et éventuellement sont plus longs en direction axiale qu'ils ne sont épais en direction radiale.

5. Dispositif d'étanchéité selon la revendication 3 ou 4, **caractérisé en ce que** le profil de l'élément d'étanchéité (632 ; 732) présente radialement un creux (664 ; 764) ou une surélévation (662 ; 762) intérieur ou extérieur pour une prise par complémentarité de forme de la paroi de la dérivation (612; 712) ou de la conduite (610 ; 710) ou à l'intérieur de celles-ci.

6. Dispositif d'étanchéité selon la revendication 2, **caractérisé en ce que** l'extrémité cylindrique de la dérivation (212) ou de la conduite (210) qui reçoit le corps de soupape (22) présente une tubulure intérieure (236) coaxiale dont la surface extérieure radiale forme la surface antagoniste (228) supplémentaire.

7. Dispositif d'étanchéité selon la revendication 6, **caractérisé en ce que** la tubulure intérieure (536) présente sur son extrémité libre un renflement extérieur (556) radial pour la prise par complémentarité de forme dans une rainure annulaire (558) intérieure radiale de l'élément d'étanchéité (532).

8. Dispositif d'étanchéité selon la revendication 4, **caractérisé en ce que** l'espace de montage (420) est au point de dérivation entièrement dans la paroi de la conduite (410).

9. Dispositif d'étanchéité selon la revendication 2, pour une soupape d'injection dont l'extrémité du coprs formant raccordement à la conduite d'amenée de carburant (310) ou à sa dérivation (312) présente une rainure annulaire (344) extérieure radiale avec la surface antagoniste (326) pour le siège de l'élément d'étanchéité (332), **caractérisé en ce que** le profil de l'élément d'étanchéité (332) est pour l'essentiel un rectangle avec une rainure annulaire (350) axialement médiane et radialement intérieure pour loger deux collets (340 et 348) situés l'un en face de l'autre axialement pour délimiter axialement la rainure annulaire (349) du corps de soupape (322) ou sur l'extrémité libre d'un prolongement (346) perforé axialement qui communique avec la paroi de la conduite (310) et qui forme la surface antagoniste (328) supplémentaire pour l'application de la surface d'étanchéité (335) supplémentaire de l'élément d'étanchéité (322).

10. Dispositif d'étanchéité selon la revendication 1, pour le raccordement d'un manchon de tuyau (810) et d'une extrémité de tube (816), en particulier pour des conduites de carburant, qui comportent un manchon et une extrémité de tube enfilée qui délimitent ensemble un espace annulaire (812) cylindrique coaxial dans lequel se trouve au moins un anneau d'étanchéité (818) en tant qu'élément d'étanchéité, **caractérisé en ce que** le manchon (810) présente une tubulure (820) cylindrique, axialement en saillie dans l'espace annulaire (812), qui entoure l'extrémité de tube (816); et qu'il est prévu un unique anneau d'étanchéité (818) essentiellement profilé en forme de L, qui présente une surface extérieure (818.1) cylindrique en tant que surface d'étanchéité extérieure qui s'applique sur la paroi cylindrique extérieure de l'espace annulaire (812) en tant que surface antagoniste et une surface intérieure (818.2) cylindrique étagée en tant que surface d'étanchéité intérieure ayant une étendue qui s'applique de façon étanche sur l'extrémité de tube par une surface antagoniste extérieure et à côté de celle-ci axialement sur le pourtour extérieur de la tubulure cylindrique (820) en tant que surface antagoniste supplémentaire.

## Revendications (Revendications pour l'(les) Etat(s) contractant(s) suivant(s): DE, FR, GB, IT)

1. Dispositif d'étanchéité résistant aux basses températures pour des véhicules et des avions ainsi que pour des bateaux et des machines, comprenant un élément d'étanchéité (818) annulaire élastomère qui par deux surfaces d'étanchéité (818.1 et 818.2) opposées éloignées l'une de l'autre s'applique sous tension préalable sur deux surfaces antagonistes tournées l'une vers l'autre d'un espace de montage (812) pour l'élément d'étanchéité ; et il y a, pour l'étanchéification à l'état froid, sur l'élément d'étanchéité (818) au moins une surface d'étanchéité (818.2) supplémentaire qui, lors du refroidissement, se rétracte sur une surface antagoniste (820.1) supplémentaire qui est formée par une partie (820) voisine de l'espace de montage (812), dont le coefficient de dilatation est significativement inférieur à celui de l'élément d'étanchéité ; pour le raccordement par enfilement d'un manchon de tuyau (810) et d'une extrémité de tube (816), en particulier pour des conduites de carburant, qui comportent un manchon et une extrémité de tube enfilée, qui délimitent ensemble un espace annulaire (812) cylindrique coaxial dans lequel se trouve au moins un anneau d'étanchéité (818) en tant qu'élément d'étanchéité, **caractérisé en ce que** le manchon (810) présente une tubulure (820) cylindrique, axialement en saillie dans l'espace annulaire (812), qui entoure l'extrémité de tube (816); et il est prévu un unique anneau d'étanchéité (818) essentiellement profilé en forme de L, qui présente une surface extérieure (818.1) cylindrique en tant que surface d'étanchéité extérieure qui s'applique sur la paroi cylindrique extérieure de l'espace d'annulaire (812) en tant que surface antagoniste, et une surface intérieure (818.2) cylindrique étagée en tant que surface d'étanchéité intérieure ayant une étendue qui s'applique de façon étanche sur l'extrémité de tube par une surface antagoniste extérieure et à côté de celle-ci axialement sur le pourtour extérieur de la tubulure (820) en tant que surface antagoniste supplémentaire.
